# FASCICULE DE BREVET EUROPEEN

(11) **EP 3 593 645 B1**
(45) Date de publication et mention de la délivrance du brevet: **22.10.2025**
(21) Numéro de dépôt: 19188686.0
(22) Date de dépôt: 02.03.2016
(51) Int. Cl.: A23B 4/07

(54) **PROCÉDÉ DE DÉCONGÉLATION**
ABTAUVERFAHREN
DEFROSTING METHOD

(30) Priorité: 04.03.2015 FR 1551805
(43) Date de publication de la demande: 15.01.2020
(62) Demande divisionnaire de: 16707738.7
(73) Titulaire: Lutetia, 60128 Plailly (FR)
(72) Inventeur: DEUMIER, François, 95160 MONTMORENCY (FR); BOUCHARD, Jérôme, 12459 BERLIN (DE); LONGO, Philippe, 92190 MEUDON (FR)
(74) Mandataire: Ipsilon

(56) Documents cités:
- EP-A1- 0 574 327
- EP-A1- 2 327 310
- WO-A1-2010/133356
- FR-A1- 2 711 485
- JP-A- H04 187 914
- YANUSHKIN N P ET AL: "Vacuum defrosting of meat blocks and cuts, and equipment for this purpose. (translated)", FSTA,, 1 January 1970 (1970-01-01), XP002580421
- D.W. EVERINGTON ET AL: "Auftauen gefrorener Nahrungsmittel im Vakuum", DIE LEBENSMITTEL-INDUSTRIE, vol. 19, no. 10, 1 January 1972 (1972-01-01), pages 423 - 426, XP009184837
- KAREL HOKE ET AL.: "Rizené rozmrazováni potravin", CZECH J. FOOD SCI., vol. 18, no. 5, 1 January 2000 (2000-01-01), pages 194 - 200, XP009184836

## Description

La présente invention concerne un procédé de décongélation de produits alimentaires congelés.

On connait de la demande EP 0 574 327 A1 un procédé de décongélation de produits alimentaires dans lequel les produits sont placés dans une cuve hermétique fermée, mise sous vide. De la chaleur est apportée par injection de vapeur d'eau dans la cuve, cette injection pouvant se faire de façon intermittente ou continue. Dans un exemple de mise en œuvre, un sel ou une saumure est introduit dans la cuve, de manière à commencer le saumurage des produits en même temps que leur décongélation. La mise sous vide présente alors l'avantage de favoriser la pénétration des exsudats et des sels dans les produits en cours de décongélation. Il est possible de maintenir l'injection de vapeur pour obtenir une cuisson au moins partielle des produits alimentaires.

FR 2 711 485 divulgue un procédé de barattage, de saumurage, de cuisson et de décongélation de viandes.

La demande de brevet EP 2 327 310 divulgue un procédé de décongélation de viande à une pression autour de 30 à 75 mbar. WO 2010/133356 A1 décrit également un procédé de décongélation de viandes hachées.

Il existe un besoin pour décongeler les produits alimentaires avec un apport d'eau réduit.

La décongélation classique à l'air libre se fait sans apport d'eau mais conduit à des pertes de protéines dans les exsudats de décongélation, qui sont génératrices de baisse de qualité et de coût de retraitement des effluents.

Un procédé de décongélation mettant en œuvre un malaxeur équipé d'une double enveloppe dans laquelle circule un fluide d'une température contrôlée n'est pas entièrement satisfaisant non plus car il conduit à des temps de traitement plus longs et à un endommagement des produits, les transferts de chaleur étant relativement lents et les produits décongelés rapidement abimés par les chutes des blocs encore durs présents dans le malaxeur qui retombent sur le reste des produits.

Il existe par conséquent un besoin pour bénéficier d'un procédé de décongélation rapide avec apport d'eau réduit tout en préservant la qualité des produits.

L'invention a pour objet un procédé de décongélation de produits alimentaires congelés présents initialement sous forme de produit congelé individuellement IQF (Individual Quick Frozen) ou sous la forme d'un ou plusieurs blocs de produits alimentaires agglomérés au sein d'une enceinte d'un malaxeur, selon la revendication 1, comportant les étapes consistant à :
- injecter de la vapeur d'eau dans l'enceinte pour provoquer, le cas échéant, la dissociation des produits alimentaires du ou des blocs et/ou ramollir la surface des blocs ou des produits IQF, la quantité totale de vapeur injectée étant inférieure ou égale à 10%, mieux à 8%, du poids total des produits à décongeler, cette injection de vapeur étant de préférence conduite sous pression réduite afin d'éviter une cuisson de surface,
- soumettre les produits alimentaires à une évaporation sous vide.

L'invention permet de maîtriser le niveau d'eau apporté lors de la décongélation en réduisant les pertes de protéines solubles.

L'injection de vapeur, essentiellement voire exclusivement au début du procédé permet de décongeler rapidement la surface des blocs et de provoquer leur dissociation, ce qui permet de réduire le phénomène d'écrasement précité. L'évaporation sous vide permet en même temps de sécher les produits.

L'invention peut, dans le cas de produits alimentaires en blocs, permettre notamment d'obtenir un produit moins abîmé, sans ajout d'eau, voire plus sec que s'il était frais, le procédé étant performant en termes de temps et de productivité, assurant une grande régularité d'une fabrication à l'autre, et son rendement permettant de réduire les pertes de protéines.

La quantité totale de vapeur injectée est de préférence comprise entre 0,1 et 10 % du poids total des produits alimentaires à décongeler, mieux entre 0,1 et 5%.

L'injection de vapeur est de préférence discontinue, ce qui permet de maintenir un niveau de vide plus élevé, afin de réduire les risques de cuisson de surface.

L'injection de vapeur peut ainsi alterner avec des phases de remise sous vide de l'enceinte.

Le procédé peut ainsi comporter une ou plusieurs phases durant laquelle ou lesquelles les produits alimentaires sont soumis à un vide ébouillantif à une pression absolue inférieure ou égale à 25 mbar au sein de l'enceinte, mieux à 20 mbar, encore mieux à une pression inférieure ou égale à 10 mbar.

De l'énergie thermique peut être apportée autrement aux produits alimentaires pendant et/ou après l'injection de vapeur et la dissociation du ou des blocs, pour poursuivre la décongélation.

Cette énergie thermique peut être apportée par conduction, rayonnement et/ou radiofréquence, de préférence par conduction.

Le malaxeur peut à cet effet comporter une double enveloppe au sein de laquelle circule un fluide à une température contrôlée, de préférence comprise entre 4°C et + 55°C. La température du fluide est choisie en fonction de l'avancement de la décongélation.

Les produits alimentaires peuvent être refroidis après décongélation, de préférence par conduction, notamment en abaissant la température du fluide circulant dans la double enveloppe, et/ou par évaporation endothermique par le vide.

La double enveloppe du malaxeur peut être ainsi alimentée durant la phase de refroidissement en fluide de refroidissement à une température contrôlée, de préférence comprise entre -10°C et + 10°C.

Le procédé comporte successivement :
- A) une phase de préparation durant laquelle le vide est fait dans le malaxeur avant l'injection de vapeur,
- B) une phase de décongélation vapeur, durant laquelle a lieu au moins une injection de vapeur, et de préférence plusieurs injections de vapeur espacées dans le temps, en alternance avec des phases de remise sous vide de l'enceinte,
- C) une phase de décongélation par apport d'énergie autrement que par de la vapeur, de préférence à l'aide d'une double enveloppe,
- D) une phase d'équilibrage, durant laquelle les produits alimentaires sont exposés au vide dans le malaxeur en rotation, avec une température de consigne produit inférieure à celle fixée durant la phase de décongélation C),
- E) une phase d'évaporation avec compensation d'endothermie, durant laquelle les produits alimentaires sont exposés au vide ébouillantif et soumis à un apport d'énergie avec une température de consigne T_{E} produit intermédiaire entre celle des étapes C) et D), avec de préférence 4 ≤ T_{E} ≤ +25°C, encore mieux +4<T_{E} <12°C,

Dans une variante, le procédé comporte successivement :
- A) une phase de préparation durant laquelle le vide est fait dans le malaxeur avant l'injection de vapeur,
- B) une phase de décongélation vapeur, durant laquelle a lieu au moins une injection de vapeur, et de préférence plusieurs injections de vapeur espacées dans le temps, en alternance avec des phases de remise sous vide de l'enceinte, ainsi qu'une décongélation par apport d'énergie autrement que par de la vapeur, de préférence à l'aide d'une double enveloppe,
- C) une phase d'équilibrage, durant laquelle les produits alimentaires sont exposés au vide dans le malaxeur en rotation, avec une température de consigne produit inférieure à celle fixée durant la phase de décongélation B),
- D) une phase d'évaporation avec compensation d'endothermie, durant laquelle les produits alimentaires sont exposés au vide ébouillantif et soumis à un apport d'énergie avec une température de consigne T_{E} produit intermédiaire entre celle des étapes B) et D), avec de préférence 4 ≤ T_{E} ≤ +25°C, encore mieux +4<T_{E} <12°C,

Le procédé peut comporter en outre :
- une phase d'évaporation et de refroidissement, durant laquelle les produits alimentaires sont exposé au vide et soumis à un refroidissement avec une température de consigne produit T_{F} inférieure à celle de l'étape E) du premier exemple ci-dessus ou D) de la variante ci-dessus, avec de préférence -1 ≤ T_{F} ≤ 6°C, mieux 0,5<T_{F}<6°C.

Les produits alimentaires sont par exemple constitués par des morceaux de viande, étant entendu que l'invention n'est pas limitée à la décongélation de viande, et s'applique à tous produits alimentaires en blocs ou congelés IQF.

Du sel peut être rajouté dans le malaxeur.

La vitesse de rotation du malaxeur peut être comprise entre 0,25 et 6 tr/min, de préférence entre 0,5 et 1,25 tr/min.

L'invention pourra être mieux comprise à la lecture de la description détaillée qui va suivre, d'un exemple de mise en œuvre non limitatif de celle-ci, et à l'examen du dessin annexé, sur lequel :

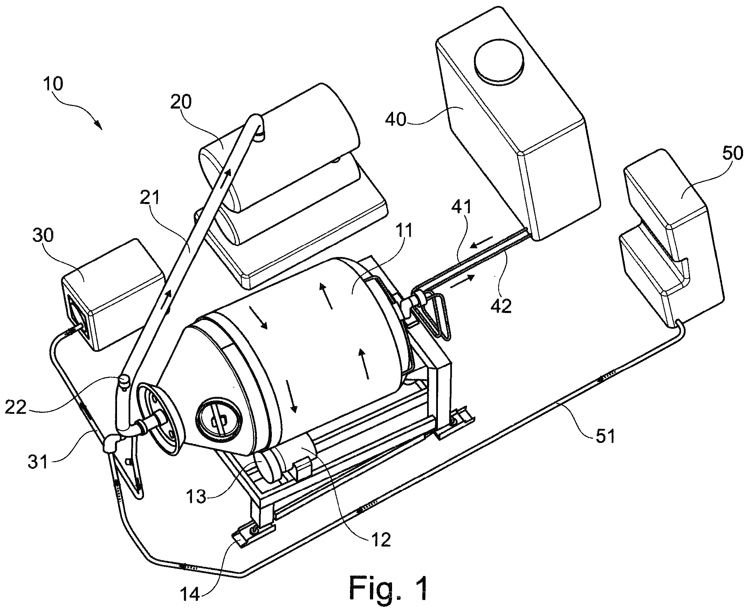

- la figure 1 représente, de façon schématique, en perspective, un exemple d'installation pour la mise en œuvre du procédé selon l'invention.

L'installation 10 représentée à la figure 1 (ne fait pas partie de l'invention) permet la mise en œuvre du procédé selon l'invention.

Cette installation 10 comporte un malaxeur 11, comportant une cuve entraînée en rotation sur elle-même autour d'un axe de rotation qui est par exemple horizontal. Cette cuve peut être entraînée en rotation grâce à un berceau équipé d'un moteur électrique 12, et d'au moins un galet d'entraînement 13.

Le berceau peut être équipé à sa base de pesons 14 qui permettent de connaître le poids des produits alimentaires placés dans la cuve.

L'installation comporte également un groupe de vide ébouillantif 20 qui est relié par une canalisation 21 à l'enceinte du malaxeur grâce à un joint tournant. La canalisation 21 peut être équipée d'un capteur de pression 22 permettant de connaître la pression dans cette enceinte. Le cas échéant, comme illustré, l'installation 10 comporte une pompe à vide standard 30, pour obtenir un vide primaire, non ébouillantif. Le groupe de vide 20 permet de descendre assez bas en pression pour entrer en régime ébouillantif. La pompe à vide 30 est reliée par une canalisation 31 à l'enceinte, et permet d'obtenir le vide primaire dans l'enceinte de manière plus économique.

Le malaxeur 11 est à double enveloppe, dans laquelle circule un fluide à température contrôlée. Ce fluide circule également par des canalisations 41 et 42 d'aller et retour reliées à un groupe thermique 40 permettant de produire du chaud ou du froid, selon les besoins.

L'installation 10 comporte également un générateur de vapeur 50 relié par une canalisation 51 au malaxeur, qui permet d'injecter dans l'enceinte contenant les produits alimentaires de la vapeur.

### Exemple :

On décongèle dans un malaxeur 240 kg de blocs de viande de volaille.

### Phase de préparation :

Le générateur de vapeur 50 est mis en chauffe et le vide est fait dans le malaxeur 11 au moyen de la pompe à vide 30.

### Phase de décongélation vapeur :

Pendant 50 minutes, on alterne des phases d'injection de vapeur (débit de 240 g/min), par exemple de moins de 2 min, avec le malaxeur en rotation par exemple à 1 tr/.min, des phases de rotation à 1 tr/min sans injection de vapeur, par exemple de plus de 5 min, et des phases de remise sous vide avec la pompe à vide 30, par exemple moins de 2 min. Le poids de vapeur injecté sur 10 minutes est dans cet exemple de 2,4 kg, soit 1 % du poids de viande.

### Phase de décongélation via la double-enveloppe :

On fait tourner le malaxeur pendant une durée comprise entre 4 h et 8 h à 1 tr/min avec la pompe à vide 30 en fonctionnement et la double enveloppe alimentée en eau glycolée chaude régulée à une température comprise entre 25 et 40 °C par le groupe thermique.

La température de régulation sur le produit Tc est comprise entre 10°C et 15°C.

### Phase d'équilibrage :

On fait tourner le malaxeur pendant une durée comprise entre 0,5 h et 2 h avec la pompe à vide 30 en fonctionnement et la double enveloppe alimentée en eau glycolée froide régulée à une température négative par le groupe thermique. La température de régulation sur le produit T_{D} est par exemple comprise entre 1 et 6 °C.

### Phase d'évaporation avec compensation d'endothermie :

On enchaîne ensuite pendant une durée comprise entre 5 h et12 h avec le groupe de vide ébouillantif 20 en fonctionnement et la double enveloppe alimentée en eau glycolée chaude régulée à une température comprise entre 10 °C et 20 °C par le groupe thermique. La température de régulation T_{E} sur le produit est par exemple comprise entre 4 °C et 12°C.

### Phase d'évaporation et de refroidissement :

On entraîne pour terminer le malaxeur en rotation avec le groupe de vide ébouillantif 20 en fonctionnement et la double enveloppe alimentée en eau glycolée froide régulée à une température légèrement négative par le groupe thermique. La température de régulation sur le produit T_{F} est par exemple comprise entre 0,5 °C et 3 °C.

Bien entendu, l'invention n'est pas limitée à l'exemple illustré.

Par "malaxeur", il faut comprendre tout appareil permettant de brasser les aliments contenus à l'intérieur d'une façon qui soit compatible avec le but recherché. Il peut s'agir d'une cuve rotative, comme illustré dans le dessin de la présente demande, ou d'un mélangeur sous vide à bras.

## Revendications

1. Procédé de décongélation de produits alimentaires congelés présents initialement sous forme de produits congelés individuellement (IQF) ou sous la forme d'un ou plusieurs blocs de produits alimentaires agglomérés au sein d'une enceinte d'un malaxeur (11), comportant les étapes consistant à :
- injecter de la vapeur d'eau dans l'enceinte pour provoquer le cas échéant la dissociation des produits alimentaires du ou des blocs et/ou ramollir la surface des blocs ou des produits IQF, la quantité totale de vapeur injectée étant inférieure ou égale à 10% du poids total des produits à décongeler,
- soumettre les produits alimentaires à une évaporation sous vide, le procédé comportant, successivement :
- A) une phase de préparation durant laquelle le vide est fait dans le malaxeur avant l'injection de vapeur,
- B) une phase de décongélation vapeur, durant laquelle a lieu au moins une injection de vapeur, et de préférence plusieurs injections de vapeur espacées dans le temps, en alternance avec des phases de remise sous vide de l'enceinte,
- C) une phase de décongélation par apport d'énergie autrement que par de la vapeur, de préférence à l'aide d'une double enveloppe,
- D) une phase d'équilibrage, durant laquelle les produits alimentaires sont exposés au vide dans le malaxeur en rotation, avec une température de consigne produit inférieure à celle fixée durant la phase de décongélation C),
- E) une phase d'évaporation avec compensation d'endothermie, durant laquelle les produits alimentaires sont exposés au vide ébouillantif et soumis à un apport d'énergie avec une température de consigne produit T_{E} intermédiaire entre celle des étapes C) et D), avec de préférence 4 ≤ T_{E} ≤ 25°C, mieux 4<T_{E}<12°C.

2. Procédé selon la revendication précédente, le malaxeur comportant une double enveloppe au sein de laquelle circule un fluide à une température contrôlée, le fluide circulant par des canalisations d'aller et retour reliées à un groupe thermique permettant de produire du chaud ou du froid, selon les besoins.

3. Procédé selon la revendication 2, dans lequel durant la phase de décongélation par apport d'énergie, de l'énergie est apportée par la double enveloppe, dans laquelle circule un fluide à une température contrôlée.

4. Procédé selon l'une quelconque des revendications précédentes, comportant en outre une phase d'évaporation et de refroidissement, durant laquelle les produits alimentaires sont exposés au vide et soumis à un refroidissement avec une température de consigne produit T_{F} inférieure à celle de l'étape E), avec de préférence -1≤T_{F}≤6°C, mieux 0,5<T_{F}<6°C.

5. Procédé selon l'une quelconque des revendications précédentes, la quantité de vapeur injectée étant comprise entre 0,1 et 10% du poids total des produits à décongeler.

6. Procédé selon l'une quelconque des revendications précédentes, comportant une ou plusieurs phases de vide ébouillantif durant laquelle ou lesquelles les produits alimentaires sont soumis à une pression absolue inférieure ou égale à 25 mbar au sein de l'enceinte.

## Patentansprüche

1. Verfahren zum Auftauen von gefrorenen Lebensmittelprodukten, die anfänglich in Form von einzeln gefrorenen Produkten (IQF) oder in Form von einem oder mehreren Blöcken von agglomerierten Lebensmittelprodukten in einer Kammer eines Mischers (11) vorliegen, umfassend die Schritte, die darin bestehen:
- Wasserdampf in die Kammer einzuleiten, um gegebenenfalls das Trennen der Lebensmittelprodukte des oder der Blöcke zu bewirken und/oder die Oberfläche der Blöcke oder der IQF-Produkte aufzuweichen, wobei die eingeleitete Dampfgesamtmenge höchstens 10 % des Gesamtgewichts der aufzutauenden Produkte beträgt,
- die Lebensmittelprodukte einem Verdampfen unter Vakuum zu unterziehen, wobei das Verfahren nacheinander umfasst:
- A) eine Vorbereitungsphase, während der vor dem Einleiten von Dampf das Vakuum in dem Mischer erzeugt wird,
- B) eine Dampfauftauphase, während der mindestens eine Dampfeinleitung stattfindet und bevorzugt mehrere zeitlich beabstandete Dampfeinleitungen, im Wechsel mit Phasen des erneuten Evakuierens der Kammer,
- C) eine Auftauphase durch Energiezufuhr auf andere Weise als durch Dampf, bevorzugt mithilfe eines Doppelmantels,
- D) eine Ausgleichsphase, während der die Lebensmittelprodukte in dem rotierenden Mischer dem Vakuum ausgesetzt sind, mit einer Produktsolltemperatur, die geringer als die während der Auftauphase C) festgelegte ist,
- E) eine Verdampfungsphase mit Endothermie-Kompensation, während der die Lebensmittelprodukte dem überbrühenden Vakuum ausgesetzt sind und einer Energiezufuhr mit einer mittleren Produktsolltemperatur T_{E} zwischen derjenigen der Schritte C) und D) unterzogen werden, bevorzugt mit 4 ≤ T_{E} ≤ 25 °C, besser 4<T_{E}<12 °C.

2. Verfahren nach dem vorhergehenden Anspruch, wobei der Mischer einen Doppelmantel umfasst, in dem ein Fluid mit einer kontrollierten Temperatur zirkuliert, wobei das Fluid durch Hin- und Rückleitungen zirkuliert, die mit einem thermischen Aggregat verbunden sind, das es ermöglicht, entsprechend dem Bedarf Wärme oder Kälte zu erzeugen.

3. Verfahren nach Anspruch 2, wobei während der Auftauphase durch Energiezufuhr Energie durch den Doppelmantel zugeführt wird, in dem ein Fluid mit einer kontrollierten Temperatur zirkuliert.

4. Verfahren nach einem der vorhergehenden Ansprüche, umfassend ferner eine Verdampfungs- und Abkühlungsphase, während der die Lebensmittelprodukte dem Vakuum ausgesetzt sind und einer Abkühlung mit einer Produktsolltemperatur T_{F} unterzogen werden, die geringer als die des Schritts E) ist, bevorzugt mit -1≤T_{F}≤6 °C, besser 0,5<T_{F}<6 °C.

5. Verfahren nach einem der vorhergehenden Ansprüche, wobei die eingeleitete Dampfmenge zwischen 0,1 und 10 % des Gesamtgewichts der aufzutauenden Produkte beträgt.

6. Verfahren nach einem der vorhergehenden Ansprüche, umfassend eine oder mehrere Phasen des überbrühenden Vakuums, während der oder denen die Lebensmittelprodukte einem absoluten Druck von höchstens 25 mbar in der Kammer ausgesetzt sind.

## Claims

1. Method for defrosting frozen food products initially present as individually frozen products (IQF) or as one or more blocks of compacted food products in an enclosure of a mixer (11), comprising the steps of:
- injecting steam into the enclosure to separate, if necessary, the food products from the block or blocks and/or soften the surface of the blocks or of the IQF products, the total quantity of steam injected being less than or equal to 10% of the total weight of the products to be defrosted,
- subjecting the food products to vacuum evaporation, the method comprising, successively:
- A) a preparation phase during which the mixer is evacuated before steam is injected,
- B) a steam defrosting phase, during which at least one steam injection takes place, and preferably several steam injections spaced apart in time, alternating with phases of evacuating the enclosure again,
- C) a phase of defrosting by supplying energy in a manner other than via steam, preferably using a double jacket,
- D) a balancing phase, during which the food products are exposed to the vacuum in the rotating mixer, with a product setpoint temperature lower than the temperature set during the defrosting phase C),
- E) an evaporation phase with endothermic compensation, during which the food products are exposed to the boiling vacuum and supplied with energy with an intermediate product setpoint temperature T_{E} between the temperature in steps C) and D), with preferably 4 ≤ T_{E} ≤ 25°C, and better 4 < T_{E} < 12°C.

2. Method according to the preceding claim, the mixer including a double jacket within which a fluid circulates at a controlled temperature, the fluid circulating through inlet and outlet pipes connected to a thermal unit used to produce hot or cold, as required.

3. Method according to Claim 2, wherein during the phase of defrosting by supplying energy, energy is supplied via the double jacket, in which a fluid is circulating at a controlled temperature.

4. Method according to any one of the preceding claims, further including an evaporation and cooling phase, during which the food products are exposed to vacuum and cooled with a product setpoint temperature T_{F} lower than the temperature in step E), with preferably -1 ≤ T_{F} ≤ 6°C, and better 0.5 < T_{F} < 6°C.

5. Method according to any one of the preceding claims, the quantity of steam injected being between 0.1% and 10% of the total weight of the products to be defrosted.

6. Method according to any one of the preceding claims, including one or more boiling vacuum phases during which the food products are subjected to an absolute pressure less than or equal to 25 mbar within the enclosure.
